# EUROPÄISCHE PATENTSCHRIFT

(11) **EP 4 034 782 B1**
(45) Veröffentlichungstag und Bekanntmachung des Hinweises auf die Patenterteilung: **18.10.2023**
(21) Anmeldenummer: 20828989.2
(22) Anmeldetag: 17.12.2020
(51) Int. Cl.: F16F 15/00, F16F 15/08

(54) **AN EINER RAHMENKONSTRUKTION ELASTISCH BEFESTIGTE ELEKTRISCHE MASCHINE**
ELECTRICAL MACHINE FLEXIBLY ATTACHED TO A FRAME STRUCTURE
MACHINE ÉLECTRIQUE FIXÉE DE MANIÈRE ÉLASTIQUE SUR UN CADRE DE CONSTRUCTION

(30) Priorität: 10.01.2020 EP 20151183
(43) Veröffentlichungstag der Anmeldung: 03.08.2022
(73) Patentinhaber: Siemens Aktiengesellschaft, 80333 München (DE)
(72) Erfinder: WACHTER, Raimund, 91792 Ellingen (DE); WERNER, Ulrich, 91088 Bubenreuth (DE)
(74) Vertreter: Siemens Patent Attorneys
(86) Internationale Anmeldenummer: PCT/EP2020/086596
(87) Internationale Veröffentlichungsnummer: WO 2021/139990

(56) Entgegenhaltungen:
- EP-A1- 0 432 461
- WO-A1-2006/106134
- WO-A2-2005/017386
- FR-A1- 2 986 842
- JP-A- 2004 150 546
- JP-A- 2008 208 859

## Beschreibung

Die vorliegende Erfindung geht aus von einer Maschinenanordnung,
- wobei die Maschinenanordnung eine Rahmenkonstruktion aufweist,
- wobei die Maschinenanordnung eine auf der Rahmenkonstruktion befestigte Lastmaschine aufweist,
- wobei die Maschinenanordnung eine mit der Lastmaschine gekuppelte und die Lastmaschine antreibende elektrische Maschine aufweist.

In vielen Fällen - sei es aus technologischen Gründen, sei es aus Gründen der Energieeffizienz - ist es bei elektrischen Maschinen oftmals von Bedeutung, diese mit veränderlicher Drehzahl betreiben zu können. Die elektrischen Maschinen treiben in der Regel eine entsprechende Lastmaschine an. Das Einstellen der Drehzahl als solches ist oftmals ohne weiteres erreichbar, beispielsweise durch entsprechendes Ansteuern eines die elektrische Maschine speisenden Umrichters. Derartige elektrische Maschinen, deren Drehzahl im Betrieb veränderbar ist, werden oftmals auch bei großen industriellen Anwendungen eingesetzt, auch im Leistungsbereich oberhalb von 1 MW.

Bei größeren elektrischen Maschinen wird die elektrische Maschine oftmals zusammen mit der jeweiligen Lastmaschine auf einer gemeinsamen Tragkonstruktion angeordnet, beispielsweise einem Rahmen. Nach der Montage wird die so geschaffene Maschinenanordnung - also die Einheit von Tragkonstruktion, elektrischer Maschine und Lastmaschine - an ihren Bestimmungsort gebracht und dort am Boden auf einem entsprechenden Fundament angeordnet, meist verankert.

Um die Maschinenanordnung ordnungsgemäß betreiben zu können, dürfen Schwingungen der elektrischen Maschine im gesamten Drehzahlbereich nur in einem bestimmten Ausmaß - beispielsweise unter Einhaltung der Grenzwerte nach DIN ISO 10816-3 auftreten. Um zu gewährleisten, dass Schwingungen im gesamten zulässigen Drehzahlbereich nur in dem bestimmten Ausmaß auftreten, wird die elektrische Maschine vom Hersteller der elektrischen Maschine entsprechend ausgelegt. Die Auslegung ist jedoch oftmals für eine Ausgestaltung bestimmt, bei welcher die elektrische Maschine auf einem festen Fundament angeordnet ist (beispielsweise entsprechend DIN EN 60034-14). Die Rahmenkonstruktion, auf der die elektrische Maschine angeordnet ist, ist jedoch oftmals bei weitem nicht so steif wie ein festes Fundament. Die Gründe hierfür können anlagenspezifischer und wirtschaftlicher Natur sein. Aufgrund der anderen Steifigkeit der Rahmenkonstruktion ändert sich das Schwingungsverhalten der elektrischen Maschine gegenüber einer Anordnung auf einem massiven Fundament.

Prinzipiell ist es denkbar, die elektrische Maschine derart auszulegen, dass sie auch auf der Rahmenkonstruktion die gewünschten Schwingungseigenschaften aufweist. Die Rahmenkonstruktionen unterscheiden sich jedoch voneinander. Damit ist für jede Maschinenanordnung eine eigene Auslegung und Abstimmung der elektrischen Maschine erforderlich. In der Praxis erweist sich dieser Weg daher als nicht gangbar.

In der Folge ergibt sich die Situation, dass die elektrische Maschine zwar von Seiten des Herstellers für einen Betrieb in einem bestimmten Drehzahlbereich ausgelegt wird, dieser Drehzahlbereich jedoch nur dann in vollem Umfang genutzt werden kann, wenn die elektrische Maschine auf einem massiven Fundament angeordnet wird. Wird die elektrische Maschine hingegen auf einer Rahmenkonstruktion angeordnet, ergeben sich in einem Teil dieses Drehzahlbereichs unzulässige Schwingungen. In der Konsequenz muss dieser Teil des Drehzahlbereichs daher entweder vollständig gesperrt werden oder darf zumindest nur kurzzeitig angenommen werden (beispielsweise beim schnellen Durchfahren eines kleineren "unzulässigen" Drehzahlbereichs beim Hochfahren der Drehzahl von 0 auf Nenndrehzahl). Je nach Lage des Einzelfalls können die Beschränkungen problemlos hinnehmbar sein, problematisch sein oder schlichtweg nicht hinnehmbar sein.

Aus der DE 10 2016 103 579 A1 ist bekannt, verschiedene Störgrößen, die ein Element zu Schwingungen anregen können, zu separieren.

Aus der WO 2005/017 386 A2 ist bekannt, unerwünschte Schwingungen aktiv zu kompensieren. Der WO 97/36122 A2 ist ein ähnlicher Offenbarungsgehalt zu entnehmen.

Aus der WO 2006/106 134 A1 ist bekannt, eine elektrische Maschine auf einem Tragrahmen anzuordnen und den Tragrahmen gegenüber einem Rumpf eines Schiffes an mehreren Stellen mittels aktiver Schwingungsdämpfer abzustützen.

Aus der JP 2014-020 477 A ist eine auf einer Tragkonstruktion angeordnete elektrische Maschine bekannt, wobei im Zwischenraum zwischen der Tragkonstruktion und einem Fundament ein passiver Tilger angeordnet ist. Der JP 2017-057 881 A ist ein ähnlicher Offenbarungsgehalt zu entnehmen.

Aus der FR 2 986 842 A1 ist eine Vorrichtung mit Elektromagneten bekannt, die an zwei Stützflächen oder elastischen Bolzen befestigt sind und von einem Mehrfrequenz-Ober-schwingungsregler gesteuert werden. Die Elektromagnete verwenden eine Magnetspule mit weniger Wirbeln. Eine algorithmische Einheit stabilisiert die erzeugte Leistung, um mechanische Kopplungen zu kompensieren, die Kopplungskorrektur aufgrund von Nichtlinearitäten der elastischen Bolzen und die Korrektur der zeitlichen Entwicklung der Eigenschaften physikalischer Komponenten. Die algorithmische Einheit steuert Aktionen, die auf die Elektromagnete angewendet werden. FR 2 986 842 A1 offenbart die Präambel des Anspruchs 1.

Die Aufgabe der vorliegenden Erfindung besteht darin, Möglichkeiten zu schaffen, mittels derer ein Betrieb der elektrischen Maschine im gesamten Drehzahlbereich möglich ist, ohne unzulässig hohe Schwingungen der elektrischen Maschine zu bewirken.

Die Aufgabe wird durch eine Maschinenanordnung mit den Merkmalen des Anspruchs 1 gelöst. Vorteilhafte Ausgestaltungen der Maschinenanordnung sind Gegenstand der abhängigen Ansprüche 2 bis 9.

Erfindungsgemäß wird eine Maschinenanordnung dadurch ausgestaltet,
- dass die elektrische Maschine mehrere Zwischenelemente aufweist, über welche die elektrische Maschine auf der Rahmenkonstruktion befestigt ist,
- dass die Zwischenelemente jeweils ein rahmenseitiges Hauptteil und ein maschinenseitiges Hauptteil aufweisen,
- dass die rahmenseitigen Hauptteile an der Rahmenkonstruktion und die maschinenseitigen Hauptteile an der elektrischen Maschine befestigt sind und
- dass die Zwischenelemente jeweils eine zwischen den maschinenseitigen Hauptteilen und den rahmenseitigen Hauptteilen angeordnete Federanordnung aufweisen, über welche die Gewichtskraft der elektrischen Maschine von den maschinenseitigen Hauptteilen auf die rahmenseitigen Hauptteile übertragen wird.

Erfindungsgemäß wird weiter vorgesehen,
- dass die Zwischenelemente zusätzlich jeweils ein aktives Stellelement aufweisen, mittels dessen eine in Vertikalrichtung wirkende Kraft zwischen dem jeweiligen maschinenseitigen Hauptteil und dem jeweiligen rahmenseitigen Hauptteil generierbar ist,
- dass den maschinenseitigen Hauptteilen jeweils ein Sensorelement zur Erfassung einer im Betrieb der elektrischen Maschine auftretenden vertikalen Bewegung des jeweiligen maschinenseitigen Hauptteils zugeordnet ist und
- dass den Zwischenelementen eine Regeleinrichtung zugeordnet ist, der die von den Sensorelementen erfassten vertikalen Bewegungen der maschinenseitigen Hauptteile zuführbar sind und welche die aktiven Stellelemente während des Betriebs der elektrischen Maschine dynamisch derart regelt, dass den vertikalen Bewegungen der maschinenseitigen Hauptteile entgegengewirkt wird.

Dadurch kann mittels der aktiven Stellelemente eine aktive Schwingungsdämpfung von Bewegungen der elektrischen Maschine erfolgen. Dies gilt zunächst insbesondere für vertikale Bewegungen der elektrischen Maschine. Sofern Bewegungen der elektrischen Maschine in der Horizontalebene im Bereich der maschinenseitigen Hauptteile eine Vertikalbewegung hervorrufen, können oftmals auch derartige Schwingungen mit gedämpft werden.

Vorzugsweise sind die aktiven Stellelemente konzentrisch zur jeweiligen Federanordnung angeordnet. Dadurch ergibt sich eine besonders platzsparende und effiziente Anordnung.

Die Federanordnung und die aktiven Stellelemente der Zwischenelemente werden derart aufeinander abgestimmt, dass sich die Feder-Dämpfungs-Charakteristik mindestens eines der Zwischenelemente von der Feder-Dämpfungs-Charakteristik mindestens eines anderen der Zwischenelemente unterscheidet. In diesen Fällen können oftmals Eigenmoden der Schwingungen der elektrischen Maschine beeinflusst werden, so dass alle Eigenmoden der Schwingung der elektrischen Maschine im Bereich der maschinenseitigen Hauptteile eine Vertikalbewegung hervorrufen und somit gedämpft werden können.

Weiterhin ist es möglich, dass die Zwischenelemente nachgiebige, dämpfend wirkende Pufferelemente aufweisen, über welche die maschinenseitigen Hauptteile relativ zu den rahmenseitigen Hauptteilen unter Druck in der Horizontalebene gehalten sind. Durch diese Ausgestaltung können Schwingungen der elektrischen Maschine, die in der Horizontalebene erfolgen, auch dann gedämpft werden, wenn sie im Bereich der maschinenseitigen Hauptteile keine vertikale Bewegung hervorrufen.

Es ist möglich, die Pufferelemente mindestens eines der Zwischenelemente anders auszulegen als die Pufferelemente mindestens eines anderen der Zwischenelemente oder mindestens ein zusätzliches Zwischenelement vorzusehen, das sich von den anderen Zwischenelementen dadurch unterscheidet, dass die Pufferelemente des zusätzlichen Zwischenelements ersatzlos entfernt sind oder durch unnachgiebige Überbrückungselemente ersetzt sind oder das maschinenseitige Hauptteil des zusätzlichen Zwischenelements relativ zum rahmenseitigen Hauptteil des zusätzlichen Zwischenelements nicht unter Druck in der Horizontalebene halten. In diesen Fällen wird dadurch eine Asymmetrie erzeugt, die sich auf die Eigenmoden der Schwingung der elektrischen Maschine auswirkt. Insbesondere kann die Auslegung der Zwischenelemente (gegebenenfalls einschließlich des zusätzlichen Zwischenelements) dadurch derart sein, dass alle Eigenmoden der Schwingung der elektrischen Maschine im Bereich der maschinenseitigen Hauptteile eine Vertikalkomponente aufweisen. Insbesondere wenn zusätzlich auch die aktiven Stellelemente vorhanden sind, können in diesem Fall durch die Regelung der aktiven Stellelemente oftmals beliebige Bewegungen der elektrischen Maschine beeinflusst werden und somit auf alle Eigenmoden der Schwingung der elektrischen Maschine aktiv Einfluss genommen werden.

Vorzugsweise wirken die Pufferelemente in der Horizontalebene auf jeweilige vertikale Stützflächen des jeweiligen maschinenseitigen Hauptteils und sind an am jeweiligen rahmenseitigen Hauptteil angeordneten, relativ zum jeweiligen rahmenseitigen Hauptteil in einer zur jeweiligen vertikalen Stützfläche orthogonalen Richtung verstellbaren und relativ zum jeweiligen rahmenseitigen Hauptteil fixierbaren Halteelementen befestigt. Dadurch ist es möglich, die elektrische Maschine auf die Federanordnung aufzusetzen, während die Pufferelemente von den Stützflächen beabstandet sind, und die Pufferelemente erst nach dem Aufsetzen der elektrischen Maschine an die Stützflächen anzustellen. Dadurch wirken auf die Pufferelemente im statischen Zustand keine vertikalen Kräfte, welche Scherbewegungen der Pufferelemente bewirken könnten.

Selbstverständlich ist auch die umgekehrte Ausgestaltung möglich, dass also die Pufferelemente in der Horizontalebene auf jeweilige vertikale Stützflächen des jeweiligen rahmenseitigen Hauptteils wirken und an am jeweiligen maschinenseitigen Hauptteil angeordneten, relativ zum jeweiligen maschinenseitigen Hauptteil in einer zur jeweiligen vertikalen Stützfläche orthogonalen Richtung verstellbaren und relativ zum jeweiligen maschinenseitigen Hauptteil fixierbaren Halteelementen befestigt sind.

Vorzugsweise sind die Federanordnungen am jeweiligen maschinenseitigen Hauptteil und/oder am jeweiligen rahmenseitigen Hauptteil befestigt. Dadurch sind die Federanordnungen unverlierbar am jeweiligen Hauptteil gehalten. Die Befestigung der Federanordnungen kann beispielsweise über Klemmstücke (Federklemmen) erfolgen.

Vorzugsweise sind die maschinenseitigen Hauptteile an der elektrischen Maschine und/oder die rahmenseitigen Hauptteile an der Rahmenkonstruktion lösbar befestigt. Dies erleichtert insbesondere die Montage. Ein typisches Beispiel einer lösbaren Befestigung ist eine Schraubverbindung.

Erfindungsgemäß weisen die maschinenseitigen Hauptteile und die rahmenseitigen Hauptteile Anschlagelemente auf, mittels derer Verlagerungen der maschinenseitigen Hauptteile relativ zu den rahmenseitigen Hauptteilen in der Horizontalebene und in Vertikalrichtung begrenzt werden. Dadurch kann zum einen eine Transportsicherung und zum anderen auch eine Betriebssicherung bewirkt werden.

Vorzugsweise weisen die Anschlagelemente Markierungen auf, so dass die Positionierung der maschinenseitigen Hauptteile relativ zu den rahmenseitigen Hauptteilen in der horizontalen Ebene mit bloßem Auge quantitativ erfassbar ist. Dadurch ist eine einfache Justierung der Hauptteile relativ zueinander möglich. Dies ist insbesondere dann von Vorteil, wenn die aktiven Stellelemente vorhanden sind.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Maschinenanordnung von der Seite,
- FIG 2: einen Ausschnitt der Maschinenanordnung von FIG 1 in etwas detaillierterer Darstellung,
- FIG 3: die Maschinenanordnung von FIG 1 aus einer Richtung A in FIG 1,
- FIG 4: ein Zwischenelement in perspektivischer Darstellung,
- FIG 5: das Zwischenelement von FIG 4 im Schnitt,
- FIG 6: schematisch das Zwischenelement von FIG 4,
- FIG 7: einen Teil des Zwischenelements von FIG 6,
- FIG 8 bis 11: je zwei Zwischenelemente in einer Draufsicht von oben,
- FIG 12: Teile eines Zwischenelements im Schnitt und
- FIG 13: die Teile des Zwischenelements von FIG 12 von oben.

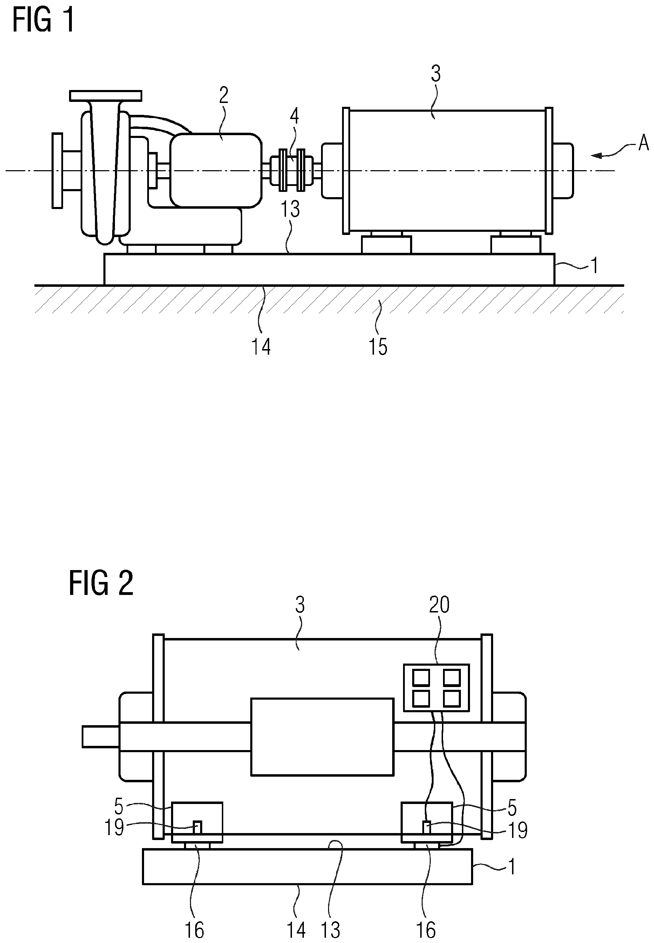

Gemäß den FIG 1 bis 3 weist eine Maschinenanordnung eine Rahmenkonstruktion 1 auf. Die Rahmenkonstruktion 1 besteht in der Regel aus Stahlträgern. Die Stahlträger können beispielsweise ein Doppel-T-Profil aufweisen. Auf der Rahmenkonstruktion 1 ist eine Lastmaschine 2 befestigt. Die Lastmaschine 2 kann beispielsweise eine Pumpe, ein Gebläse, ein Lüfter oder ein Verdichter sein. Die Lastmaschine 2 wird von einer elektrischen Maschine 3 angetrieben. Die Lastmaschine 2 ist zu diesem Zweck mit der elektrischen Maschine 3 über eine Kupplung 4 gekuppelt.

Die elektrische Maschine 3 ist über mehrere Zwischenelemente 5 auf der Rahmenkonstruktion 1 befestigt. Die Anzahl an Zwischenelementen 5 liegt in der Regel bei vier. In diesem Fall sind die Zwischenelemente 5 in der Regel derart angeordnet, dass sie ein Rechteck bilden. Im Einzelfall können aber auch mehr oder weniger Zwischenelemente 5 vorhanden sein und können die Zwischenelemente 5 auch anders angeordnet sein. In aller Regel sind aber mindestens drei Zwischenelemente 5 vorhanden, die nicht in einer Reihe angeordnet sind, so dass die Zwischenelemente 5 eine Ebene definieren.

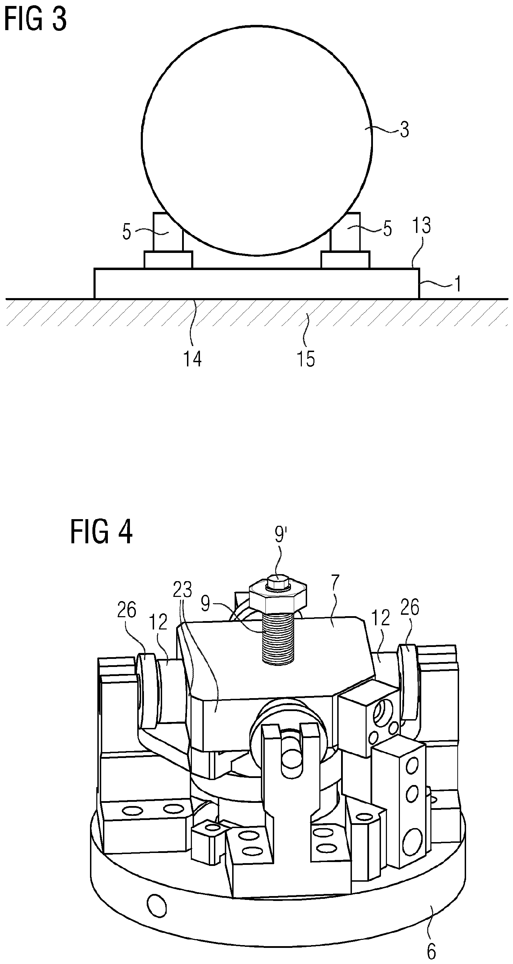

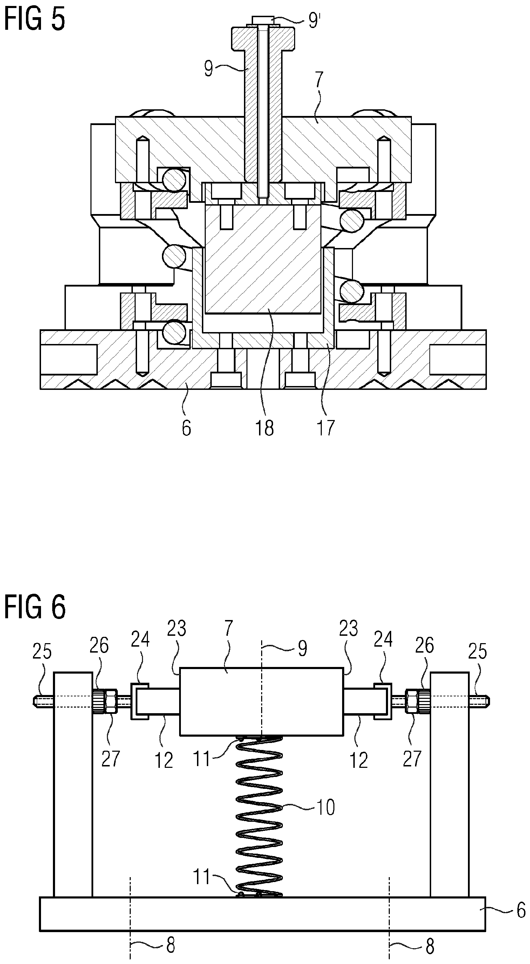

Nachfolgend wird - zunächst in Verbindung mit den FIG 4 und 5, später auch in Verbindung mit weiteren FIG - ein einzelnes der Zwischenelemente 5 näher erläutert. Die Ausführungen zu dem dargestellten Zwischenelement 5 gelten für alle Zwischenelemente 5. Sofern bestimmte Aussagen nur für einzelne Zwischenelemente 5 gelten sollen, wird nachstehend jeweils ausdrücklich darauf hingewiesen.

Gemäß den FIG 4 und 5 weisen die Zwischenelemente 5 jeweils ein rahmenseitiges Hauptteil 6 und ein maschinenseitiges Hauptteil 7 auf. Die beiden Hauptteile 6, 7 können beispielsweise plattenartig ausgebildet sein bzw. zur Rahmenkonstruktion 1 und zur elektrischen Maschine 3 hin eine Platte aufweisen. Die rahmenseitigen Hauptteile 6 sind an der Rahmenkonstruktion 1 befestigt. Die maschinenseitigen Hauptteile 7 sind an der elektrischen Maschine 3 befestigt. Die Befestigung der rahmenseitigen Hauptteile 6 an der Rahmenkonstruktion 1 und der maschinenseitigen Hauptteile 7 an der elektrischen Maschine 3 ist starr. Die Hauptteile 6, 7 können an der Rahmenkonstruktion 1 bzw. der elektrischen Maschine 3 unlösbar befestigt sein. Vorzugsweise sind sie jedoch an der Rahmenkonstruktion 1 bzw. an der elektrischen Maschine 3 lösbar befestigt. Beispielsweise können sie über Schraubverbindungen 8, 9 (in FIG 6 schematisch durch gestrichelte Linien angedeutet) an der Rahmenkonstruktion 1 bzw. der elektrischen Maschine 3 befestigt sein. In einer besonders bevorzugten Ausgestaltung ist die Schraubverbindung 9 zwischen dem maschinenseitigen Hauptteil 7 und der elektrischen Maschine 3 entsprechend der Darstellung in den FIG 4 und 5 als Hohlschraube ausgebildet. Der Grund hierfür wird später noch ersichtlich werden.

Die Zwischenelemente 5 weisen jeweils eine Federanordnung 10 auf. Die jeweilige Federanordnung 10 ist zwischen dem jeweiligen rahmenseitigen Hauptteil 6 und dem jeweiligen maschinenseitigen Hauptteil 7 angeordnet. Die Federanordnungen 10 können am jeweiligen rahmenseitigen Hauptteil 6 und/oder am jeweiligen maschinenseitigen Hauptteil 7 befestigt sein. Beispielsweise können sie über Klammern 11 gehalten sein. Über die Federanordnungen 10 wird die Gewichtskraft der elektrischen Maschine 3 von den maschinenseitigen Hauptteilen 7 auf die rahmenseitigen Hauptteile 6 übertragen. Die Federanordnungen 10 nehmen also die gesamte Gewichtskraft der elektrischen Maschine 3 auf.

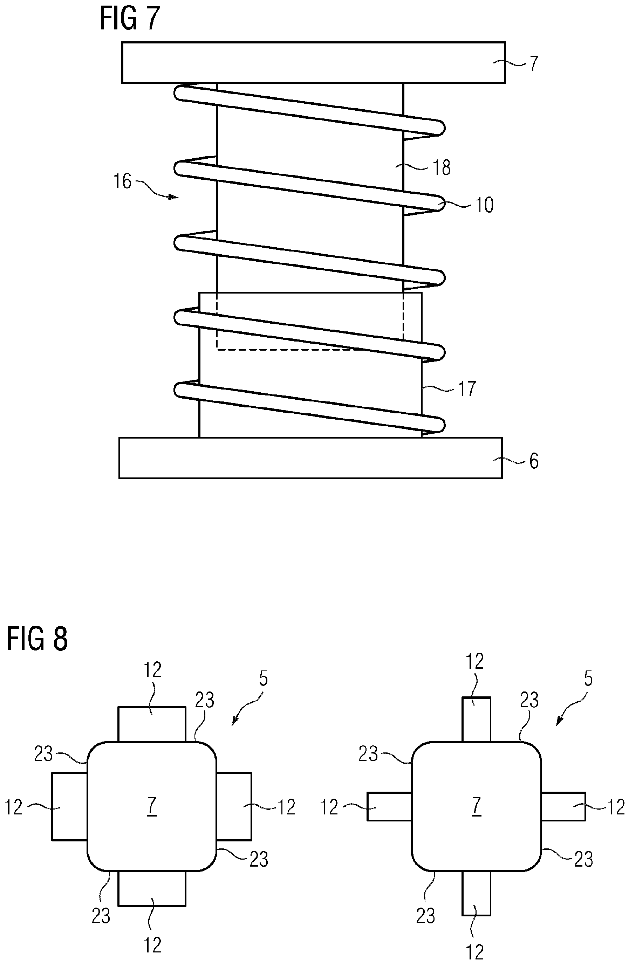

Die Federanordnungen 10 der Zwischenelemente 5 sind Elemente, die sich im Betrieb verformen. Die Verformung ist jedoch ausschließlich elastisch. Es tritt also weder eine sofortige plastische Verformung noch eine allmähliche plastische Verformung auf. Beispielsweise können die Federanordnungen 10 entsprechend der Darstellung in den FIG 6 und 7 jeweils als einzelne Schraubenfeder ausgebildet sein. Alternativ können sie beispielsweise als Gruppe von nebeneinander angeordneten Schraubenfedern ausgebildet sein. Die Schraubenfedern bestehen in der Regel aus Stahl.

Es ist möglich, dass keine weiteren Elemente vorhanden sind. In der Regel weisen die Zwischenelemente 5 jedoch weiterhin nachgiebige, dämpfend wirkende Pufferelemente 12 auf. Über die Pufferelemente 12 werden die maschinenseitigen Hauptteile 7 in diesem Fall relativ zu den rahmenseitigen Hauptteilen 6 unter Druck in der Horizontalebene gehalten. Die Pufferelemente 12 können beispielsweise als Gummielemente ausgebildet sein.

Die Lastmaschine 2 kann direkt auf der Rahmenkonstruktion 1 befestigt sein, also ohne Zwischenelemente 5, wie sie für die Befestigung der elektrischen Maschine 3 vorgesehen sind. Alternativ kann auch die Lastmaschine 2 über derartige Zwischenelemente 5 auf der Rahmenkonstruktion 1 befestigt sein. In aller Regel sind jedoch sowohl die Lastmaschine 2 als auch die elektrische Maschine 3 "auf" der Rahmenkonstruktion 1 angeordnet. Die Rahmenkonstruktion 1 weist also - siehe die FIG 1 und 2 - eine horizontal orientierte Oberseite 13 und unterhalb der Oberseite 13 eine ebenso horizontal orientierte Unterseite 14 auf. Mit der Unterseite 14 liegt die Rahmenkonstruktion 1 auf einem Fundament 15 auf. In der Regel ist sie auf dem Fundament 15 auch befestigt. Auf der Oberseite 13 sind die Lastmaschine 2 und die elektrische Maschine 3 befestigt.

Vorzugsweise weisen die Zwischenelemente 5 entsprechend der Darstellung in FIG 7 zusätzlich jeweils ein aktives Stellelement 16 auf. Das jeweilige aktive Stellelement 16 besteht aus zwei Aktivteilen 17, 18, wobei das jeweilige Aktivteil 17 am rahmenseitigen Hauptteil 6 des jeweiligen Zwischenelements 5 und das jeweilige Aktivteil 18 am maschinenseitigen Hauptteil 7 des jeweiligen Zwischenelements 5 befestigt ist. Die Befestigung kann insbesondere durch eine Verschraubung bewirkt werden. Insbesondere in dem Fall, dass die Verschraubung zwischen dem maschinenseitigen Hauptteil 7 und der elektrischen Maschine 3 als Hohlschraube ausgebildet ist, kann weiterhin eine Schraube 9', mittels der das jeweilige Aktivteil 18 am maschinenseitigen Hauptteil 7 befestigt ist, entsprechend der Darstellung in den FIG 4 und 5 durch die Hohlschraube hindurch geführt sein.

Das aktive Stellelement 16 kann beispielsweise ähnlich dem Antrieb eines Lautsprechers als elektromechanischer Aktuator ausgebildet sein. Unabhängig von der konkreten Ausgestaltung kann mittels des jeweiligen aktiven Stellelements 16 jedoch zwischen dem jeweiligen rahmenseitigen Hauptteil 6 und dem jeweiligen maschinenseitigen Hauptteil 7 eine Kraft generiert werden, die in Vertikalrichtung wirkt.

Sofern die aktiven Stellelemente 16 vorhanden sind, weist das jeweilige Zwischenelement 5 entsprechend der Darstellung in FIG 2 auch (mindestens) ein Sensorelement 19 auf. Das jeweilige Sensorelement 19 ist dem jeweiligen maschinenseitigen Hauptteil 7 zugeordnet. Es ist in der Lage, eine vertikale Bewegung des jeweiligen maschinenseitigen Hauptteils 7 zu erfassen, die im Betrieb der elektrischen Maschine 3 auftritt. Die Sensorelemente 19 können beispielsweise als Beschleunigungssensoren oder als Geschwindigkeitssensoren ausgebildet sein. Es ist möglich, dass das jeweilige Sensorelement 19 integraler Bestandteil des jeweiligen aktiven Stellelements 16 ist oder sogar intrinsisch durch das jeweilige aktive Stellelement 16 selbst realisiert ist.

Die Sensorelemente 19 führen die von ihnen erfassten Sensorsignale, also im Ergebnis die erfassten vertikalen Bewegungen der maschinenseitigen Hauptteile 7, einer den Zwischenelementen 5 zugeordneten Regeleinrichtung 20 zu. Die Regeleinrichtung 20 ist dadurch in der Lage, die aktiven Stellelemente 16 während des Betriebs der elektrischen Maschine 3 dynamisch derart zu regeln, dass den vertikalen Bewegungen der maschinenseitigen Hauptteile 7 entgegengewirkt wird. Die entsprechende Vorgehensweise ist Fachleuten als aktive Schwingungsdämpfung allgemein bekannt und muss daher nicht näher erläutert werden.

Die aktiven Stellelemente 16 wirken parallel zu den Federanordnungen 10. Sie können insbesondere konzentrisch zur jeweiligen Federanordnung 10 angeordnet sein. Beispielsweise kann die jeweilige Federanordnung 10 entsprechend der Darstellung in FIG 7 das jeweilige aktive Stellelement 16 umgeben oder kann umgekehrt das jeweilige aktive Stellelement 16 die jeweilige Federanordnung 10 umgeben. Es sind aber auch Anordnungen nebeneinander denkbar.

Es ist beispielsweise entsprechend der Darstellung in FIG 8 möglich, dass die Pufferelemente 12 mindestens eines der Zwischenelemente 5 anders ausgelegt sind als die Pufferelemente 12 mindestens eines anderen der Zwischenelemente 5. Dies ist in FIG 8 dadurch angedeutet, dass die Pufferelemente 12 des einen Zwischenelements 5 größer gezeichnet sind als die Pufferelemente 12 des anderen Zwischenelements 5.

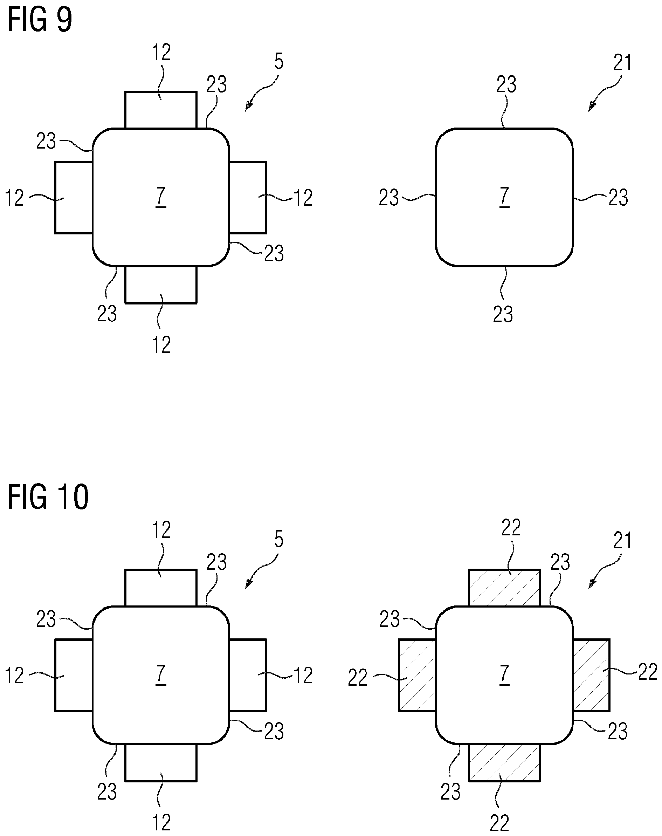

Alternativ ist es möglich, dass entsprechend der Darstellung in den FIG 9 bis 11 zusätzlich zu den bisher erläuterten Zwischenelementen 5 mindestens ein zusätzliches Zwischenelement 21 vorhanden ist. In diesem Fall ersetzt das zusätzliche Zwischenelement 21 sozusagen eines der Zwischenelemente 5. Beispielsweise kann die Maschinenanordnung insgesamt vier Zwischenelemente 5, 21 aufweisen, wobei drei der Zwischenelemente 5, 21 die Zwischenelemente 5 sind und das vierte der Zwischenelement 5, 21 das zusätzliche Zwischenelement 21 ist. Das zusätzliche Zwischenelement 21 ist vom Ansatz her ebenso aufgebaut wie die bisher erläuterten Zwischenelemente 5. Es unterscheidet sich jedoch dadurch, dass das maschinenseitige Hauptteil 7 in der Horizontalebene anders gehalten wird. Hierbei sind verschiedene, zueinander alternative Ausgestaltungen möglich.

So ist es beispielsweise entsprechend der Darstellung in FIG 9 möglich, dass das zusätzliche Zwischenelement 21 sich von den anderen Zwischenelementen 5 dadurch unterscheidet, dass bei dem zusätzlichen Zwischenelement 21 keine Pufferelemente vorhanden sind. Das maschinenseitige Hauptteil 7 des zusätzlichen Zwischenelements 21 wird dadurch relativ zum rahmenseitigen Hauptteil 6 des zusätzlichen Zwischenelements 21 in der Horizontalebene nur durch die Federanordnung 10 und eventuell das aktive Stellelement 16 gehalten bzw. fixiert, so dass eine Schwingung des jeweiligen maschinenseitigen Hauptteils 7 in der Horizontalebene relativ schwach gedämpft wird.

Alternativ ist es entsprechend der Darstellung in FIG 10 möglich, dass das zusätzliche Zwischenelement 21 sich von den anderen Zwischenelementen 5 dadurch unterscheidet, dass es anstelle der Pufferelemente unnachgiebige Überbrückungselemente 22 aufweist. Die Überbrückungselemente 22 können beispielsweise als Klötze aus Stahl ausgebildet sein. Dies ist in FIG 10 durch eine entsprechende Schraffur angedeutet. Das maschinenseitige Hauptteil 7 des zusätzlichen Zwischenelements 21 wird durch die unnachgiebigen Überbrückungselemente 22 relativ zum rahmenseitigen Hauptteil 6 des zusätzlichen Zwischenelements 21 in der Horizontalebene starr gehalten bzw. fixiert, so dass es in der Horizontalebene nicht schwingen kann.

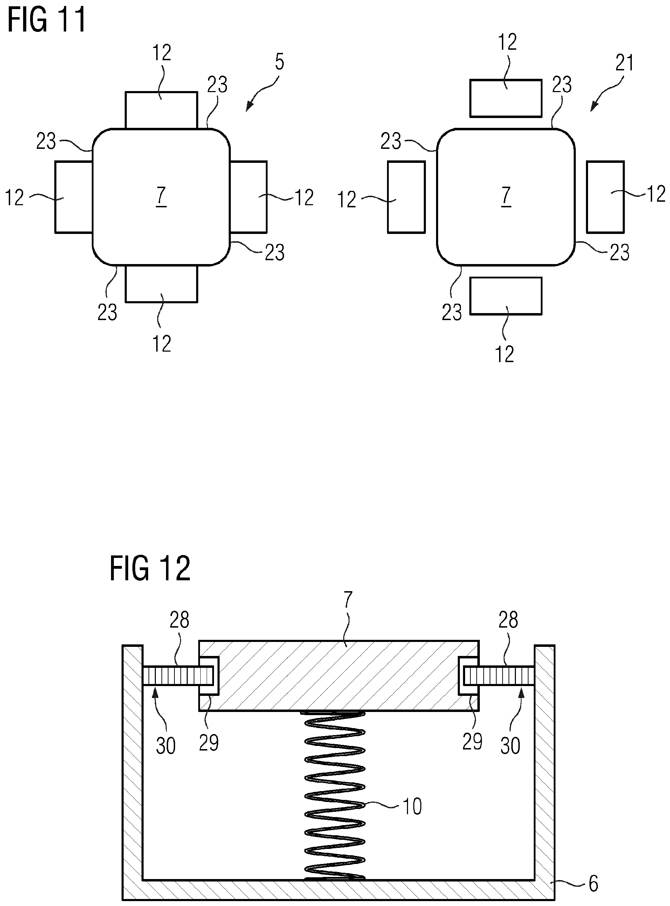

Wiederum alternativ ist es entsprechend der Darstellung in FIG 11 möglich, dass das zusätzliche Zwischenelement 21 sich von den anderen Zwischenelementen 5 dadurch unterscheidet, dass es zwar Pufferelemente 12 aufweist, die Pufferelemente 12 aber das maschinenseitige Hauptteil 7 des zusätzlichen Zwischenelements 21 relativ zum rahmenseitigen Hauptteil 6 des zusätzlichen Zwischenelements 21 nicht unter Druck in der Horizontalebene halten. Beispielsweise können die Pufferelemente 12 des zusätzlichen Zwischenelements 21 entsprechend der Darstellung in FIG 11 vom maschinenseitigen Hauptteil 7 des zusätzlichen Zwischenelements 21 beabstandet sein. Das maschinenseitige Hauptteil 7 des zusätzlichen Zwischenelements 21 wird dadurch relativ zum rahmenseitigen Hauptteil 6 des zusätzlichen Zwischenelements 21 in der Horizontalebene nicht gehalten bzw. fixiert, sondern kann in der Horizontalebene frei schwingen.

In einer weiteren Alternative können die Federanordnungen 10 und die aktiven Stellelemente 16 der Zwischenelemente 5 derart aufeinander abgestimmt sein, dass sich die Feder-Dämpfungs-Charakteristik mindestens eines der Zwischenelemente 5 von der Feder-Dämpfungs-Charakteristik mindestens eines anderen der Zwischenelemente 5 unterscheidet.

Die Pufferelemente 12 des jeweiligen Zwischenelements 5 wirken entsprechend der Darstellung in den FIG 4 bis 11 in der Horizontalebene auf jeweilige Stützflächen 23 des maschinenseitigen Hauptteils 7 des jeweiligen Zwischenelements 5. Die Stützflächen 23 sind in der Regel vertikal orientiert. Die Pufferelemente 12 des jeweiligen Zwischenelements 5 sind weiterhin entsprechend der Darstellung in FIG 6 an Halteelementen 24 befestigt. Die Halteelemente 24 sind am jeweiligen rahmenseitigen Hauptteil 6 angeordnet. Sie sind einerseits relativ zum jeweiligen rahmenseitigen Hauptteil 6 in einer zur jeweiligen vertikalen Stützfläche 23 orthogonalen Richtung - also in der Horizontalebene - verstellbar. Weiterhin sind sie relativ zum jeweiligen rahmenseitigen Hauptteil 6 fixierbar. Beispielsweise können sie ihren von den Stützflächen 23 abgewandten Seiten einen Gewindebolzen 25 aufweisen, so dass durch Drehen einer Rändelmutter 26 ein Verstellen in der Horizontalebene möglich ist, und weiterhin durch eine Kontermutter 27 nach dem Verstellen die dann eingestellte Lage fixierbar ist. Es sind jedoch auch andere Ausgestaltungen möglich.

Weiterhin ist selbstverständlich auch die umgekehrte Vorgehensweise möglich, dass also die Halteelemente 24 mit ihren daran befestigten Pufferelementen 12 am maschinenseitigen Hauptteil 7 befestigt sind und die Pufferelemente 12 auf jeweilige vertikale Stützflächen 23 des jeweiligen rahmenseitigen Hauptteils 6 wirken. Dies ist nicht extra dargestellt.

Die Möglichkeit, die Halteelemente 24 mit ihnen die Pufferelemente 12 in der Horizontalebene zu verstellen, vereinfacht zum einen die Montage der elektrischen Maschine 3 auf der Rahmenkonstruktion 1. Denn insbesondere ist es möglich, zum Montieren der elektrischen Maschine 3 auf der Rahmenkonstruktion 1 zunächst die Halteelemente 24 zurückzufahren, so dass beim Aufsetzen der elektrischen Maschine 3 auf die maschinenseitigen Hauptteile 7 die maschinenseitigen Hauptteile 7 in der Horizontalebene nicht mit Kräften beaufschlagt werden. Erst nach dem Aufsetzen der elektrischen Maschine 3 auf die maschinenseitigen Hauptteile 7 werden dann die Pufferelemente 12 an die Stützflächen 23 angestellt.

Die Möglichkeit, die Halteelemente 24 mit ihnen die Pufferelemente 12 in der horizontalen Ebene zu verstellen, ermöglicht zum anderen, die Ausgestaltungen gemäß FIG 8 und FIG 11 zu realisieren. Insbesondere ist es möglich, zur Realisierung der Ausgestaltung gemäß FIG 8 die Pufferelemente 12 bei dem in FIG 8 rechts dargestellten Zwischenelement 5 mit geringerem Druck anzustellen als bei dem in FIG 8 links dargestellten Zwischenelement 11. Auch ist es möglich, zur Realisierung der Ausgestaltung gemäß FIG 11 die Pufferelemente 12 so einzustellen, dass sie von den Stützflächen 23 beabstandet sind.

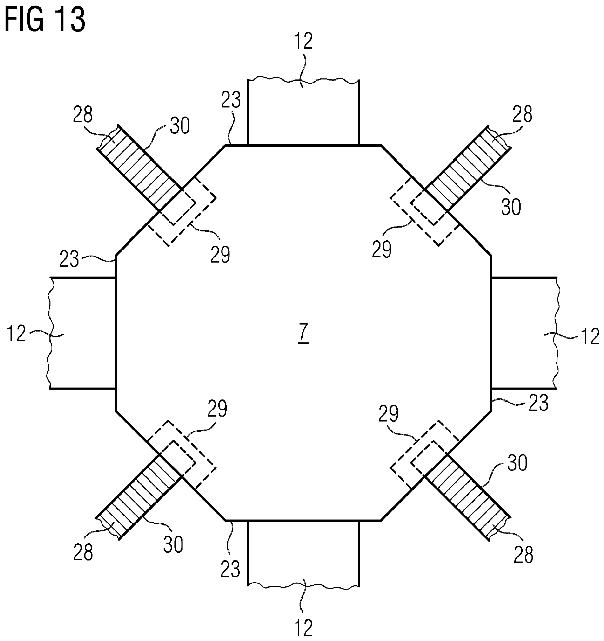

In einer besonders bevorzugten Ausgestaltung weisen die maschinenseitigen Hauptteile 7 und die rahmenseitigen Hauptteile 6 entsprechend der Darstellung in den FIG 12 und 13 Anschlagelemente 28, 29 auf. Mittels der Anschlagelemente 28, 29 können Verlagerungen der maschinenseitigen Hauptteile 7 relativ zu den rahmenseitigen Hauptteilen 6 in der Horizontalebene und in Vertikalrichtung begrenzt werden. Dadurch kann zum einen eine Transportsicherung realisiert werden. Weiterhin kann zum anderen auch die Auslenkung in der Horizontalebene und in Vertikalrichtung, wie sie durch kurzzeitige mechanische Überlastungen auftreten kann, begrenzt werden. Ursache für mechanische Überlastungen können beispielsweise Auslenkungen aufgrund von elektrischen Kurzschlüssen oder mechanische Stöße sein.

Die Anschlagelemente 29 der maschinenseitigen Hauptteile 7 können beispielsweise entsprechend der Darstellung in den FIG 12 und 13 als Nuten ausgebildet sein, die sich in Vertikalrichtung erstrecken. Die Anschlagelemente 28 der rahmenseitigen Hauptteile 6 können in diesem Fall als Stifte ausgebildet sein, welche in die Nuten eingreifen. Es sind aber auch andere Ausgestaltungen möglich.

Entsprechend der Darstellung in den FIG 12 und 13 weisen die Anschlagelemente 28, 29 - hier zumindest die Anschlagelemente 28 der rahmenseitigen Hauptteile 6 - Markierungen 30 auf. Die Markierungen 30 bilden einen Maßstab. Dadurch ist es möglich, die Positionierung der maschinenseitigen Hauptteile 7 relativ zu den rahmenseitigen Hauptteilen 6 in der Horizontalebene mit bloßem Auge quantitativ zu erfassen.

Zusammengefasst betrifft die vorliegende Erfindung somit folgenden Sachverhalt:
Auf einer Rahmenkonstruktion 1 ist eine Lastmaschine 2 befestigt. Mit der Lastmaschine 2 ist eine elektrische Maschine 3 gekuppelt, welche die Lastmaschine 2 antreibt. Die elektrische Maschine 3 ist über mehrere Zwischenelemente 5 auf der Rahmenkonstruktion 1 befestigt. Rahmenseitige Hauptteile 6 der Zwischenelemente 5 sind an der Rahmenkonstruktion 1 befestigt, maschinenseitige Hauptteile 7 der Zwischenelemente 5 an der elektrischen Maschine 3. Zwischen den maschinenseitigen Hauptteilen 7 und den rahmenseitigen Hauptteilen 6 ist jeweils eine Federanordnung 10 angeordnet, über welche die Gewichtskraft der elektrischen Maschine 3 von den maschinenseitigen Hauptteilen 7 auf die rahmenseitigen Hauptteile 6 übertragen wird.

Die vorliegende Erfindung weist viele Vorteile auf. Insbesondere kann auf einfache und zuverlässige Weise eine wirkungsvolle Dämpfung von Schwingungen der elektrischen Maschine 3 erreicht werden. Dies gilt ganz besonders im Falle, dass die aktiven Stellelemente 16 vorhanden sind. Beschränkungen von Drehzahlbereichen sind nicht mehr erforderlich. Bei der Auslegung insbesondere der aktiven Stellelemente 16 und deren Betrieb bzw. der Auslegung der Regeleinrichtung 20 kann auch berücksichtigt werden, dass eine Schwingungsübertragung ins Fundament 15 so weit wie möglich reduziert wird. Im Falle einer unsymmetrischen Ausgestaltung (beispielsweise gemäß den FIG 8 bis 11) können weiterhin alle Eigenmoden von Schwingungen der elektrischen Maschine 3 wirkungsvoll gedämpft werden. Aufgrund des Umstands, dass die Pufferelemente 12 unter Druck an den Stützflächen 23 anliegen, werden nicht nur Schwingungen in der Horizontalebene gedämpft, sondern auch vertikale Schwingungen. Dadurch erfolgt auch bei einem Ausfall des jeweiligen aktiven Stellelements 16 noch eine Restdämpfung einer vertikalen Bewegung des jeweiligen Hauptteils 7. Aufgrund des Umstands, dass die Gewichtskraft der elektrischen Maschine 3 vollständig von den Federanordnungen 10 aufgenommen wird, können weiterhin Setzungserscheinungen der Pufferelemente 12 und die damit verbundenen Nachteile vermieden oder zumindest deutlich reduziert werden. Mittels der aktiven Stellelemente 16 kann weiterhin bei Bedarf eine Feinausrichtung der elektrischen Maschine 3 erfolgen. In diesem Fall tritt jedoch bei einem Ausfall eines aktiven Stellelements 16 eine Fehlausrichtung auf.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, wie im Anspruchssatz definiert.

## Patentansprüche

1. Maschinenanordnung,
- wobei die Maschinenanordnung eine Rahmenkonstruktion (1) aufweist,
- wobei die Maschinenanordnung eine auf der Rahmenkonstruktion (1) befestigte Lastmaschine (2) aufweist,
- wobei die Maschinenanordnung eine mit der Lastmaschine (2) gekuppelte und die Lastmaschine (2) antreibende elektrische Maschine (3) aufweist,
- wobei die Maschinenanordnung mehrere Zwischenelemente (5) aufweist, über welche die elektrische Maschine (3) auf der Rahmenkonstruktion (1) befestigt ist,
- wobei die Zwischenelemente (5) jeweils ein rahmenseitiges Hauptteil (6) und ein maschinenseitiges Hauptteil (7) aufweisen,
- wobei die rahmenseitigen Hauptteile (6) an der Rahmenkonstruktion (1) und die maschinenseitigen Hauptteile (7) an der elektrischen Maschine (3) befestigt sind,
- wobei die Zwischenelemente (5) jeweils eine zwischen den maschinenseitigen Hauptteilen (7) und den rahmenseitigen Hauptteilen (6) angeordnete Federanordnung (10) aufweisen, über welche die Gewichtskraft der elektrischen Maschine (3) von den maschinenseitigen Hauptteilen (7) auf die rahmenseitigen Hauptteile (6) übertragen wird und
- wobei die maschinenseitigen Hauptteile (7) und die rahmenseitigen Hauptteile (6) Anschlagelemente (28, 29) aufweisen, mittels derer Verlagerungen der maschinenseitigen Hauptteile (7) relativ zu den rahmenseitigen Hauptteilen (6) in der Horizontalebene und in Vertikalrichtung begrenzt werden,
- wobei die Zwischenelemente (5) zusätzlich jeweils ein aktives Stellelement (16) aufweisen, mittels dessen eine in Vertikalrichtung wirkende Kraft zwischen dem jeweiligen maschinenseitigen Hauptteil (7) und dem jeweiligen rahmenseitigen Hauptteil (6) generierbar ist,
- wobei den maschinenseitigen Hauptteilen (7) jeweils ein Sensorelement (19) zur Erfassung einer im Betrieb der elektrischen Maschine (3) auftretenden vertikalen Bewegung des jeweiligen maschinenseitigen Hauptteils (7) zugeordnet ist und
- wobei den Zwischenelementen (5) eine Regeleinrichtung (20) zugeordnet ist, der die von den Sensorelementen (19) erfassten vertikalen Bewegungen der maschinenseitigen Hauptteile (7) zuführbar sind und welche die aktiven Stellelemente (16) während des Betriebs der elektrischen Maschine (3) dynamisch derart regelt, dass den vertikalen Bewegungen der maschinenseitigen Hauptteile (7) entgegengewirkt wird,
- **dadurch gekennzeichnet, dass** die Federanordnung (10) und die aktiven Stellelemente (16) der Zwischenelemente (5) derart aufeinander abgestimmt sind, dass sich die Feder-Dämpfungs-Charakteristik mindestens eines der Zwischenelemente (5) von der Feder-Dämpfungs-Charakteristik mindestens eines anderen der Zwischenelemente (5) unterscheidet.

2. Maschinenanordnung nach Anspruch 1, **dadurch**
**gekennzeichnet , dass** die aktiven Stellelemente (16) konzentrisch zur jeweiligen Federanordnung (10) angeordnet sind,

3. Maschinenanordnung nach einem der obigen Ansprüche,
**dadurch gekennzeichnet , dass** die Zwischenelemente (5) nachgiebige, dämpfend wirkende Pufferelemente (12) aufweisen, über welche die maschinenseitigen Hauptteile (7) relativ zu den rahmenseitigen Hauptteilen (6) unter Druck in der Horizontalebene gehalten sind.

4. Maschinenanordnung nach Anspruch 3, **dadurch**
**gekennzeichnet, dass** die Pufferelemente (12) mindestens eines der Zwischenelemente (5) anders ausgelegt sind als die Pufferelemente (12) mindestens eines anderen der Zwischenelemente (5) oder dass mindestens ein zusätzliches Zwischenelement (21) vorhanden ist, das sich von den anderen Zwischenelementen (5) dadurch unterscheidet, dass es keine Pufferelemente aufweist oder anstelle der Pufferelemente unnachgiebige Überbrückungselemente (22) aufweist oder zwar Pufferelemente (12) aufweist, die Pufferelemente (12) aber das maschinenseitige Hauptteil (7) des zusätzlichen Zwischenelements (21) relativ zum rahmenseitigen Hauptteil (6) des zusätzlichen Zwischenelements (21) nicht unter Druck in der Horizontalebene halten.

5. Maschinenanordnung nach Anspruch 3 oder 4, **dadurch gekennzeichnet, dass** die Pufferelemente (12) in der Horizontalebene auf jeweilige vertikale Stützflächen (23) des jeweiligen maschinenseitigen Hauptteils (7) wirken und dass die Pufferelemente (12) an am jeweiligen rahmenseitigen Hauptteil (6) angeordneten, relativ zum jeweiligen rahmenseitigen Hauptteil (6) in einer zur jeweiligen vertikalen Stützfläche (23) orthogonalen Richtung verstellbaren und relativ zum jeweiligen rahmenseitigen Hauptteil (6) fixierbaren Halteelementen (24) befestigt sind.

6. Maschinenanordnung nach Anspruch 3 oder 4, **dadurch gekennzeichnet, dass** die Pufferelemente (12) in der Horizontalebene auf jeweilige vertikale Stützflächen (23) des jeweiligen rahmenseitigen Hauptteils (6) wirken und dass die Pufferelemente (12) an am jeweiligen maschinenseitigen Hauptteil (7) angeordneten, relativ zum jeweiligen maschinenseitigen Hauptteil (7) in einer zur jeweiligen vertikalen Stützfläche (23) orthogonalen Richtung verstellbaren und relativ zum jeweiligen maschinenseitigen Hauptteil (7) fixierbaren Halteelementen (24) befestigt sind.

7. Maschinenanordnung nach einem der obigen Ansprüche,
**dadurch gekennzeichnet, dass** die Federanordnungen (10) am jeweiligen maschinenseitigen Hauptteil (7) und/oder am jeweiligen rahmenseitigen Hauptteil (6) befestigt sind.

8. Maschinenanordnung nach einem der obigen Ansprüche,
**dadurch gekennzeichnet, dass** die maschinenseitigen Hauptteile (7) an der elektrischen Maschine (3) und/oder die rahmenseitigen Hauptteile (6) an der Rahmenkonstruktion (1) lösbar befestigt sind.

9. Maschinenanordnung nach einem der obigen Ansprüche,
**dadurch gekennzeichnet, dass** die Anschlagelemente (28,29) Markierungen (30) aufweisen, so dass die Positionierung der maschinenseitigen Hauptteile (7) relativ zu den rahmenseitigen Hauptteilen (6) in der horizontalen Ebene mit bloßem Auge quantitativ erfassbar ist.

## Claims

1. Machine assembly,
- wherein the machine assembly has a frame construction (1),
- wherein the machine assembly has a load machine (2) that is fastened to the frame construction (1),
- wherein the machine assembly has an electric machine (3) that is coupled to the load machine (2), said electric machine driving the load machine (2),
- wherein the machine assembly has several intermediate elements (5) via which the electric machine (3) is fastened to the frame construction (1),
- wherein the intermediate elements (5) in each case have a frame-side main part (6) and a machine-side main part (7),
- wherein the frame-side main parts (6) are fastened to the frame construction (1) and the machine-side main parts (7) are fastened to the electric machine (3),
- wherein the intermediate elements (5) in each case have a spring assembly (10) arranged between the machine-side main parts (7) and the frame-side main parts (6), via which the weight force of the electric machine (3) is transferred from the machine-side main parts (7) to the frame-side main parts (6), and
- wherein the machine-side main parts (7) and the frame-side main parts (6) have end stop elements (28, 29) by means of which displacements of the machine-side main parts (7) relative to the frame-side main parts (6) in the horizontal plane and in the vertical direction are limited,
- wherein the intermediate elements (5) additionally have in each case an active actuation element (16), by means of which a force acting in the vertical direction can be generated between the respective machine-side main part (7) and the respective frame-side main part (6),
- wherein a sensor element (19) for detecting a vertical movement of the respective machine-side main part (7) during operation of the electric machine (3) is assigned to each of the machine-side main parts (7), and
- wherein the intermediate elements (5) are assigned a regulation facility (20), to which the vertical movements of the machine-side main parts (7) detected by the sensor elements (19) can be fed and which dynamically regulates the active actuation elements (16) during operation of the electric machine (3) so as to counteract the vertical movements of the machine-side main parts (7),
- **characterised in that** the spring assembly (10) and the active actuation elements (16) of the intermediate elements (5) are tuned to one another such that the spring damping characteristic of at least one of the intermediate elements (5) differs from the spring damping characteristic of at least one other of the intermediate elements (5).

2. Machine assembly according to claim 1, **characterised in that** the active actuation elements (16) are arranged concentrically to the respective spring assembly (10).

3. Machine assembly according to one of the above claims,
**characterised in that** the intermediate elements (5) have resilient buffer elements (12) with a damping effect, via which the machine-side main parts (7) are held under pressure in the horizontal plane relative to the frame-side main parts (6).

4. Machine assembly according to claim 3, **characterised in that** the buffer elements (12) of at least one of the intermediate elements (5) are designed differently from the buffer elements (12) of at least one other of the intermediate elements (5) or that at least one additional intermediate element (21) is present, which differs from the other intermediate elements (5) **in that** it has no buffer elements or that it has non-resilient bridging elements (22) instead of the buffer elements or, although it has buffer elements (12), said buffer elements (12) do not hold the machine-side main part (7) of the additional intermediate element (21) under pressure in the horizontal plane relative to the frame-side main part (6) of the additional intermediate element (21).

5. Machine assembly according to claim 3 or 4,
**characterised in that** the buffer elements (12) in the horizontal plane act on respective vertical supporting surfaces (23) of the respective machine-side main part (7) and that the buffer elements (12) are fastened to holding elements (24) arranged on the respective frame-side main part (6), which holding elements can be adjusted relative to the respective frame-side main part (6) in a direction orthogonal to the respective vertical supporting surface (23) and fixed relative to the respective frame-side main part (6).

6. Machine assembly according to claim 3 or 4,
**characterised in that** the buffer elements (12) in the horizontal plane act on respective vertical supporting surfaces (23) of the respective frame-side main part (6) and that the buffer elements (12) are fastened to holding elements (24) arranged on the respective machine-side main part (7), which holding elements can be adjusted relative to the respective machine-side main part (7) in a direction orthogonal to the respective vertical supporting surface (23) and fixed relative to the respective machine-side main part (7) .

7. Machine assembly according to one of the above claims,
**characterised in that** the spring assemblies (10) are fastened to the respective machine-side main part (7) and/or to the respective frame-side main part (6).

8. Machine assembly according to one of the above claims,
**characterised in that** the machine-side main parts (7) are fastened to the electric machine (3) and/or the frame-side main parts (6) are fastened to the frame construction (1) in a detachable manner.

9. Machine assembly according to one of the above claims,
**characterised in that** the end stop elements (28, 29) have markings (30) so that the positioning of the machine-side main parts (7) relative to the frame-side main parts (6) in the horizontal plane can be quantitatively ascertained with the naked eye.

## Revendications

1. Agencement de machine,
- dans lequel l'agencement de machine a une construction (1) en cadre,
- dans lequel l'agencement de machine a une machine (2) de charge fixée à la construction (1) en cadre,
- dans lequel l'agencement de machine a une machine (3) électrique accouplée à la machine (2) de charge et entraînant la machine (2) de charge,
- dans lequel l'agencement de machine a plusieurs éléments (5) intermédiaires, par lesquels la machine (3) électrique est fixée sur la construction (1) en cadre,
- dans lequel les éléments (5) intermédiaires ont chacun une partie (6) principale du côté du cadre et une partie (7) principale du côté de la machine,
- dans lequel les parties (6) principales du côté du cadre sont fixées à la construction (1) en cadre et les parties (7) principales du côté de la machine sont fixées à la machine (3) électrique,
- dans lequel les éléments (5) intermédiaires ont chacun un agencement (10) de ressort disposé entre les parties (7) principales du côté de la machine et les parties (6) principales du côté du cadre et par lequel la force pondérale de la machine (3) électrique est transmise des parties (7) principales du côté de la machine aux parties (6) principales du côté du cadre, et
- dans lequel les parties (7) principales du côté de la machine et les parties (6) principales du côté du cadre ont des éléments (28, 29) de butée, au moyen desquels des déplacements des parties (7) principales du côté de la machine, par rapport aux parties (6) principales du côté du cadre, sont limitées dans le plan horizontal et dans la direction verticale,
- dans lequel les éléments (5) intermédiaires ont en outre respectivement un élément (16) actif de réglage, au moyen duquel peut être créée une force agissant dans la direction verticale entre la partie (7) principale respective du côté de la machine et la partie (6) principale respective du côté du cadre,
- dans lequel, aux parties (7) principales du côté de la machine est associé respectivement un élément (19) capteur de détection d'un mouvement vertical, se produisant alors que la machine (3) électrique est en fonctionnement, de la partie (7) principale respective du côté de la machine, et
- dans lequel, aux éléments (5) intermédiaires est associé un dispositif (20) de réglage, auxquels peuvent être envoyés les mouvements verticaux, détectés par les éléments (19) capteurs, des parties (7) principales du côté de la machine et qui règle dynamiquement, pendant le fonctionnement de la machine (3) électrique, les éléments (16) actifs de réglage, de manière à s'opposer aux mouvements verticaux des parties (7) principales du côté de la machine,
- **caractérisé en ce que** l'agencement (10) de ressort et les éléments (16) actifs de réglage des éléments (5) intermédiaires sont accordés les uns aux autres, de manière à ce que la caractéristique d'amortissement de ressort d'au moins l'un des éléments (5) intermédiaires soit différente de la caractéristique d'amortissement de ressort d'au moins un autre des éléments (5) intermédiaires.

2. Agencement de machine suivant la revendication 1, **caractérisé en ce que** les éléments (16) actifs de réglage sont disposés concentriquement à l'agencement (10) de ressort respectif.

3. Agencement de machine suivant l'une des revendications précédentes, **caractérisé en ce que** les éléments (5) intermédiaires ont des éléments (12) tampon cédant élastiquement à effet d'amortissement, par lesquels les parties (7) principales du côté de la machine sont maintenues sous pression dans le plan horizontal, par rapport aux parties (6) principales du côté du cadre.

4. Agencement de machine suivant la revendication 3, **caractérisé en ce que** les éléments (12) tampon d'au moins l'un des éléments (5) intermédiaires sont conçus autrement que les éléments (12) tampon d'au moins un autre des éléments (5) intermédiaires ou **en ce qu'**au moins un élément (21) intermédiaire supplémentaire est présent, qui se distingue des autres éléments (5) intermédiaires par le fait qu'il n'a pas d'élément tampon ou qu'il a, au lieu des éléments tampon, des éléments (22) de dérivation cédant élastiquement, ou certes des éléments (12) tampon, mais des éléments (12) tampon qui ne maintiennent pas sous pression dans le plan horizontal la partie (7) principale du côté de la machine de l'élément (21) intermédiaire supplémentaire par rapport à la partie (6) principale du côté du cadre de l'élément (21) intermédiaire supplémentaire.

5. Agencement de machine suivant la revendication 3 ou 4, **caractérisé en ce que** les éléments (12) tampon agissent dans le plan horizontal sur respectivement des surfaces (23) verticales d'appui de la partie (7) principale respective du côté de la machine, et **en ce que** les éléments (12) tampon sont fixés sur des éléments (24) de maintien, montés sur la partie (6) principale respective du côté du cadre, déplaçables par rapport à la partie (6) principale respective du côté du cadre dans une direction orthogonale à la surface (23) verticale d'appui respective et pouvant être fixés par rapport à la partie (6) principale respective du côté du cadre.

6. Agencement de machine suivant la revendication 3 ou 4, **caractérisé en ce que** les éléments (12) tampon agissent dans le plan horizontal sur des surfaces (23) verticales d'appui respectives de la partie (6) principale respective du côté du cadre, et **en ce que** les éléments (12) tampon sont fixés sur des éléments (24) de maintien, montés sur la partie (7) principale respective du côté de la machine, déplaçables par rapport à la partie (7) principale du côté de la machine dans une direction orthogonale à la surface (23) verticale d'appui respective et pouvant être fixés par rapport à la partie (7) principale respective du côté de la machine.

7. Agencement de machine suivant l'une des revendications précédentes, **caractérisé en ce que** les agencements (10) de ressort sont fixés à la partie (7) principale respective du côté de la machine et/ou à la partie (6) principale respective du côté du cadre.

8. Agencement de machine suivant l'une des revendications précédentes, **caractérisé en ce que** les parties (7) principales du côté de la machine sont fixées de manière amovible à la machine (3) électrique et/ou les parties (6) principales du côté du cadre sont fixées de manière amovible à la construction (1) en cadre.

9. Agencement de machine suivant l'une des revendications précédentes, **caractérisé en ce que** les éléments (28, 29) d'appui ont des marquages (30), de manière à pouvoir détecter quantitativement à l'œil nu, le positionnement des parties (7) principales du côté de la machine par rapport aux parties (6) principales du côté du cadre dans le plan horizontal.
